# EUROPEAN PATENT SPECIFICATION

(11) **EP 4 191 830 B1**
(45) Date of publication and mention of the grant of the patent: **27.11.2024**
(21) Application number: 21848715.5
(22) Date of filing: 18.06.2021
(51) Int. Cl.: H02J 50/90, H02J 7/00

(54) **CHARGING PROMPT METHOD AND APPARATUS, AND DEVICE AND STORAGE MEDIUM**
VERFAHREN UND VORRICHTUNG ZUR LADEAUFFORDERUNG SOWIE VORRICHTUNG UND SPEICHERMEDIUM
PROCÉDÉ ET APPAREIL D'INVITATION À LA CHARGE, ET DISPOSITIF ET SUPPORT DE STOCKAGE

(30) Priority: 28.07.2020 CN 202010736509
(43) Date of publication of application: 07.06.2023
(73) Proprietor: GUANGDONG OPPO MOBILE TELECOMMUNICATIONS CORP., LTD., Dongguan, Guangdong 523860 (CN)
(72) Inventor: SHI, Yansong, Dongguan, Guangdong 523860 (CN)
(74) Representative: Ipside
(86) International application number: PCT/CN2021/100862
(87) International publication number: WO 2022/022153

(56) References cited:
- EP-A1- 3 783 770
- EP-A1- 4 075 634
- CN-A- 103 249 592
- CN-A- 108 072 314
- CN-A- 108 072 314
- CN-A- 109 073 415
- CN-A- 110 994 731
- CN-U- 205 945 249
- RU-C1- 2 727 524
- US-A- 5 821 731
- US-A1- 2010 201 315
- US-A1- 2012 235 633

## Description

### TECHNICAL FIELD

The present disclosure relates to the technical field of charging, in particular to a charging prompt method, a device, and a non-transitory computer-readable storage medium.

### BACKGROUND

Wireless charging is a technology that transmits electric energy by magnetic field and realizes charging without wire connection. Generally, in wireless charging technology, a device configured to provide the electric energy may be called a transmitting-end device, and a device configured to receive the electric energy to charge a battery therein may be called a receiving-end device. In practical applications, the transmitter device may include a transmitting coil. The transmitting coil may transmit an alternating magnetic field under a drive of an alternating current. Besides, the receiving-end device may include a receiving coil. The receiving coil may induce a current under a drive of the alternating magnetic field. The induced current may be configured to charge the battery of the receiving-end device.

At present, how to improve the charging power of the wireless charging has become an urgent problem.

For example, CN108072314A discloses a position detection device and a detection method for a receiving end located at a wireless charging transmitting end. The position detection device includes a pair of detection coils arranged horizontally and vertically at the transmitting end of the wireless charging system. All detection coils are electrically connected to the main control unit, and there is also a feedback unit connected to the main control unit for outputting information to the user. The detection method is that the main control unit detects current or voltage values generated by all detection coils, and compares the current or voltage values of the pair of detection coils in the horizontal direction and the pair of detection coils in the vertical direction to determine the offset direction of the receiving end, and informs the user of the offset direction of the receiving end through the feedback unit.

RU2727524C1 discloses a wireless charging apparatus, a system, a control method, a charging device, and a storage medium, relating to the field of wireless charging. The apparatus includes: a power supply circuit (201) configured to provide an alternating current signal; and an emitting coil (202) configured to convert the alternating current signal into an electromagnetic wave and radiating same to a receiving end (102). The wireless charging apparatus further includes: a plurality of detection coils (203) arranged at intervals in the circumferential direction of the emitting coil (202), wherein the circular trajectory formed by the plurality of detection coils (203) is concentric to the emitting coil (202); the detection coil (203) is configured to radiate energies to a receiving coil at the receiving end (102) and generate a sensing signal; a movable coil carrier (204) on which the emitting coil (202) and the plurality of detection coils (203) are all disposed; a drive mechanism (205) connected to the movable coil carrier (204) and configured to drive the movable coil carrier (204) to move; and a controller (206) configured to obtain the sensing signal of the plurality of detection coils (203) and control, according to the sensing signal of the plurality of detection coils (203), the position of the movable coil carrier (204) by controlling the drive mechanism (205).

### SUMMARY

Based on the aforesaid problem, embodiments of the present disclosure provide a charging prompt method, a charging prompt apparatus, a device and a storage medium, which may improve the charging power of wireless charging.

In a first aspect, a charging prompt method for a first end device of a wireless charging system is provided. The wireless charging system is as set out claims 1-8.

In a second aspect, a first end device is provided. The first end device is as set out claims 9-14.

In a third aspect, a non-transitory computer-readable storage medium is provided, on which a computer program is stored. In response to the computer program being executed by a processor, the charging prompt method as described in the aforesaid first aspect is executed.

The technical solution provided by the embodiments of the present disclosure at least includes the following beneficial effects. The charging prompt method is configured to detect whether a position offset exists between the second coil and the first coil by using the first end device, obtain a target offset distance between the second coil and the first coil and detect the target offset direction of the second coil relative to the first coil by using a plurality of direction detecting coils of the first end device in response to detecting that the position offset exists between the second coil and the first coil, and output position-movement prompting information according to the target offset direction and the target offset distance. The position-movement prompting information is configured to prompt a user to move the second end device or the first end device based on the target offset distance and the target offset direction. The first end device may be one of the transmitting-end device and the receiving-end device, and the second end device may be the other of the transmitting-end device and the receiving-end device. The first end device includes a first coil configured to transfer electric energy, and the second end device includes a second coil configured to transfer the electric energy. In this case, in a process of the wireless charging, the method may be configured to detect whether the position offset exists between the second coil and the first coil, and remind the user in response to the position offset being detected. The user may change a position of the second end device or the first end device according to the offset direction and the offset distance in the prompt information, so that the second coil and the first coil are aligned with each other. The charging power of the wireless charging may be maximized only in case that the second coil and the first coil are aligned with each other, therefore, the technical solution provided by some embodiments of the present disclosure may maximize the charging power by outputting the position-movement prompting information based on the target offset direction and target offset distance, and the charging power of the wireless charging may be improved.

### BRIEF DESCRIPTION OF THE DRAWINGS

FIG. 1 is a schematic diagram of an implementation environment provided by some embodiments of the present disclosure.
FIG. 2 is a flow chart of a charging prompt method provided by some embodiments of the present disclosure.
FIG. 3 is a schematic diagram of a central axis of a coil provided by some embodiments of the present disclosure.
FIG. 4 is a schematic diagram of an arranging mode of a plurality of direction detecting coils and a first coil provided by some embodiments of the present disclosure.
FIG. 5 is a flow chart of a technical process of a first end device detecting whether there is a position offset between a second coil and the first coil provided by some embodiments of the present disclosure.
FIG. 6 is a flow chart of a technical process of the first end device detecting a target offset direction of the second coil relative to the first coil provided by some embodiments of the present disclosure.
FIG. 7 is the block diagram of a charging prompt apparatus provided by some embodiments of the present disclosure.
FIG. 8 is a block diagram of the first end device provided by some embodiments of the present disclosure.
FIG. 9 is a block diagram of the first end device provided by some embodiments of the present disclosure.
FIG. 10 is a schematic diagram of a voltage resonant waveform provided by some embodiments of the present disclosure.
FIG. 11 is a block diagram of the first end device provided by some embodiments of the present disclosure.
FIG. 12 is a block diagram of the first end device provided in some embodiments of the present disclosure.
FIG. 13 is a schematic diagram of a Q value measurement circuit provided by some embodiments of the present disclosure.
FIG. 14 is a block diagram of a wireless charging system provided by some embodiments of the present disclosure.

### DETAILED DESCRIPTIONs

In order to make the purpose, technical solution and advantages of the present disclosure clearer, the embodiments of the present disclosure will be further described in detail below in combination with the accompanying figures.

In a field of wireless charging technology, a transmitter device may include a transmitting coil, and a receiving-end device may include a receiving coil. The transmitting coil may transmit an alternating magnetic field under a drive of an alternating current. The receiving coil may induce a current under a drive of the alternating magnetic field. The receiving-end device may use the induced current to charge a battery.

In practical applications, a charging power of wireless charging may be maximized only in case that the transmitting coil and the receiving coil are aligned with each other. In case that the transmitting coil and the receiving coil are not aligned with each other, that is, there is a position offset between the transmitting coil and the receiving coil, the charging power of the wireless charging cannot be maximized.

Considering the aforesaid situation, some embodiments of the present disclosure provide a charging prompt method. In the charging prompt method, a first end device is configured to detect whether there is a position offset between a second coil and a first coil, obtain a target offset distance between the second coil and the first coil and detect a target offset direction of the second coil relative to the first coil by using a plurality of direction detecting coils of the first end device in case that there is the position offset between the second coil and the first coil, and output position-movement prompting information according to the target offset direction and the target offset distance. The position-movement prompting information is configured to prompt a user to move the second end device or the first end device based on the target offset distance and the target offset direction. The first end device may be one of the transmitting-end device and the receiving-end device, and the second end device may be the other of the transmitting-end device and the receiving-end device. The first end device includes a first coil configured to transfer electric energy, and the second end device includes a second coil configured to transfer the electric energy. In this case, in a process of the wireless charging, the method may be configured to detect whether there is the position offset between the second coil and the first coil, and remind the user in case that the position offset is detected. The user may change a position of the second end device or the first end device according to the offset direction and the offset distance in the prompt information, so that the second coil and the first coil are aligned with each other. The charging power of the wireless charging may be maximized only in case that the second coil and the first coil are aligned with each other, therefore, the technical solution provided by some embodiments of the present disclosure may maximize the charging power by outputting the position-movement prompting information based on the target offset direction and target offset distance, and the charging power of the wireless charging may be improved.

An implementation environment involved in the charging prompt method provided by some embodiments of the present disclosure will be briefly described below.

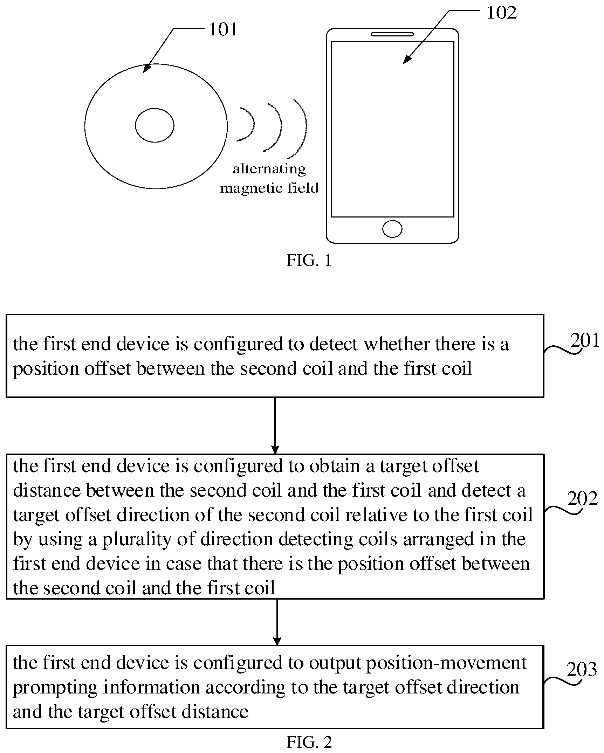

As shown in FIG. 1, the implementation environment may include a first end device 101 and a second end device 102. Electric energy may be transferred between the first end device 101 and the second end device 102 through an alternating magnetic field. The first end device 101 may be one of the transmitting-end device and the receiving-end device, and the second end device 102 may be the other of the transmitting-end device and the receiving-end device. For example, the first end device 101 may be the transmitting-end device, and the second end device 102 may be the receiving-end device. In some embodiments, the first end device 101 may be the receiving-end device, and the second end device 102 may be the transmitting-end device.

The first end device 101 may include a first coil configured to transfer the electric energy. For example, in case that the first end device 101 is the transmitting-end device, the first coil may be the transmitting coil; and in case that the first end device 101 is the receiving-end device, the first coil may be the receiving coil. The second end device 102 may include a second coil configured to transfer the electric energy. For example, in case that the second end device 102 is the transmitting-end device, the second coil may be the transmitting coil; and in case that the second end device 102 is the receiving-end device, the second coil may be a receiving coil.

In some embodiments of the present disclosure, in the first end device 101, a plurality of direction detecting coils may also be arranged around the first coil. A description of the plurality of direction detecting coils may refer to the following description of some embodiments of the present disclosure.

It should be noted that, in some embodiments of the present disclosure, the transmitting-end device may be a wireless charging base or other devices that may provide the electric power. The receiving-end device may be a mobile phone, a tablet computer, a wearable device, an e-book reader, or other devices that need to charge a battery.

As shown in FIG. 2, FIG. 2 is a flow chart of a charging prompt method provided by some embodiments of the present disclosure. The charging prompt method may be applied to the first end device of the implementation environment shown in FIG. 1. As shown in FIG. 2, the charging prompt method may include the following operations.

Operation 201, the first end device is configured to detect whether there is a position offset between the second coil and the first coil.

It should be noted that "there is a position offset between the second coil and the first coil" and "the second coil and the first coil are aligned with each other" are two opposite concepts.

In some embodiments, "the second coil and the first coil are aligned with each other" means that central axes of the second coil and the first coil coincide with each other, and relatively, "there is a position offset between the second coil and the first coil" means that central axes of the second coil and the first coil do not coincide with each other.

In some embodiments, "the second coil and the first coil are aligned with each other" means that a distance between the central axes of the second coil and the first coil is less than or equal to a preset axis distance threshold, and relatively, "there is a position offset between the second coil and the first coil" means that the distance between the central axes of the second coil and the first coil is greater than the preset axis distance threshold.

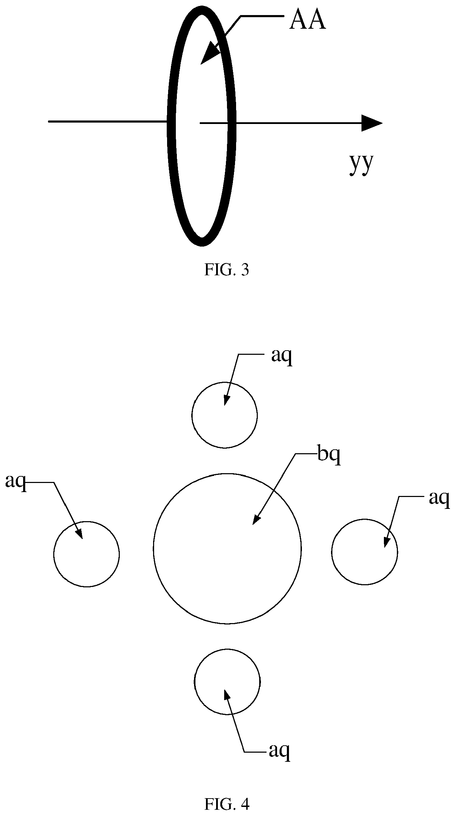

It should be noted that, a coil usually refers to wire windings in a ring shape, and the central axis of the coil refers to a symmetrical axis of the wire windings. The central axis of the coil is perpendicular to a plane on which a ring of the wire windings is located. As shown in FIG. 3, FIG. 3 shows the central axis yy of the coil AA. As shown in FIG. 3, the central axis yy is the symmetrical axis of the coil AA, and the central axis yy is perpendicular to a plane on which the ring of the coil AA is located.

In some embodiments, the first end device may be configured to execute a technical process of detecting whether there is a position offset between the second coil and the first coil in response to determining that there is a second end device around the first end device. For example, the first end device may periodically transmit an energy pulse by using the first coil, and the second end device may reply another energy pulse to the first end device after receiving the energy pulse. In case that the first end device receives another energy pulse, the first end device may determine that there is a second end device around the first end device. In this case, the first end device may be configured to execute the technical process of detecting whether there is a position offset between the second coil and the first coil. In some embodiments, the second end device may periodically transmit an energy pulse by using the second coil. In case that the first end device receives the energy pulse, the first end device may determine that there is a second end device around the first end device. In this case, the first end device may execute the technical process of detecting whether there is a position offset between the second coil and the first coil.

In some embodiments, the first end device may be configured to periodically execute the technical process of detecting whether there is a position offset between the second coil and the first coil. In case that there is a second end device around the first end device, the first end device may be configured to determine whether there is a position offset between the second coil and the first coil through detection. In case that there is no second end device around the first end device, the first end device may be configured to determine that there is no second end device around the first end device by detection.

Operation 202, the first end device is configured to obtain a target offset distance between the second coil and the first coil and detect a target offset direction of the second coil relative to the first coil by using a plurality of direction detecting coils arranged in the first end device in case that there is the position offset between the second coil and the first coil.

It should be noted that, the target offset distance between the second coil and the first coil may refer to a distance between the central axes of the second coil and the first coil. The target offset direction of the second coil relative to the first coil may refer to a direction of a position of the second coil relative to a position of the first coil. For example, the target offset direction may be lower, upper, left, right, upper left, lower left, upper right, lower right, and the like.

In some embodiments of the present disclosure, the first end device may include a plurality of direction detecting coils, and the first end device may detect the target offset direction of the second coil relative to the first coil by using the plurality of direction detecting coils.

The plurality of direction detecting coils are arranged around the first coil. The direction detecting coil is different from the first coil in that the direction detecting coil is not configured to transfer the electric energy to the second end device. In some embodiments, sizes of the plurality of direction detecting coils may be the same as each other. In some embodiments, the size of each of the plurality of direction detecting coils may be less than a size of the first coil.

In some embodiments of the present disclosure, the plurality of direction detecting coils have different arranging orientations relative to the first coil. In some embodiments, a geometric center of arranging positions of the plurality of direction detecting coils may be the first coil. In some embodiments, as shown in FIG. 4, the first end device may include four direction detecting coils aq. One direction detecting coil aq is arranged above the first coil bq. One direction detecting coil aq is arranged below the first coil bq. One direction detecting coil aq is arranged on the left of the first coil bq. One direction detecting coil aq is arranged on the right of the first coil bq.

In some embodiments of the present disclosure, the distances between the first coil and the plurality of direction detecting coils are the same as each other. A distance between coils refers to a distance between the central axes of the coils. Of course, in some embodiments of the present disclosure, the distances between the first coil and the plurality of direction detecting coils may also be different from each other.

In practical applications, it is difficult to achieve that the second coil and the first coil are completely aligned with each other, i.e., there is no position offset between the second coil and the first coil. In addition, generally, it is not necessary to force the user to ensure that the second coil and the first coil are completely aligned with each other. Considering this situation, in order to save process and simplify operations of the user, in the operation 202, the first end device may be configured to obtain the target offset distance between the second coil and the first coil in case that there is the position offset between the second coil and the first coil. After obtaining the target offset distance, the first end device may be configured to detect whether the target offset distance is greater than a preset distance threshold. In case that the target offset distance is greater than the preset distance threshold, the first end device is configured to execute a technical process of detecting the target offset direction of the second coil relative to the first coil. Otherwise, in case that the target offset distance is not greater than the preset distance threshold, the first end device does not need to execute the technical process of detecting the target offset direction of the second coil relative to the first coil, and then, the first end device does not need to execute the subsequent technical processes in some embodiments of the present disclosure.

Operation 203, the first end device is configured to output position-movement prompting information according to the target offset direction and the target offset distance.

The position-movement prompting information is configured to prompt the user to move the second end device or the first end device based on the target offset distance and the target offset direction.

For example, in case that the target offset distance is 1cm and the target offset direction is lower left, the position-movement prompting information may prompt the user to move the second end device by 1cm to the upper right. In this way, after the second end device is moved, the first coil and the second coil may be aligned with each other.

In some embodiments, in case that the first end device is the transmitting-end device and the second end device is the receiving-end device, the first end device may output the position-movement prompting information to the second end, and the position-movement prompting information is displayed by the second end device. In case that the first end device is the receiving-end device and the second end device is the transmitting-end device, the first end device may output the position-movement prompting information to a display component (for example, the display screen, etc.) of the first end device, and the position-movement prompting information is displayed by the display component of the first end device.

In some embodiments of the present disclosure, the position-movement prompting information may be displayed in a form of a diagram. For example, the diagram may be an arrow, a direction pointed by the arrow is the target offset direction or an opposite direction of the target offset direction, and a length of the arrow is the target offset distance. In this way, the user may intuitively understand how to move the second end device or the first end device.

The charging prompt method provided by some embodiments of the present disclosure is configured to detect whether there is the position offset between the second coil and the first coil by using the first end device, obtain the target offset distance between the second coil and the first coil and detect the target offset direction of the second coil relative to the first coil by using a plurality of direction detecting coils of the first end device in case that there is the position offset between the second coil and the first coil, and output the position-movement prompting information according to the target offset direction and target offset distance. The position-movement prompting information is configured to prompt the user to move the second end device or the first end device based on the target offset distance and the target offset direction. The first end device may be one of the transmitting-end device and the receiving-end device, and the second end device may be the other of the transmitting-end device and the receiving-end device. The first end device includes a first coil configured to transfer the electric energy, and the second end device includes a second coil configured to transfer the electric energy. In this way, in a process of the wireless charging, the method may be configured to detect whether there is the position offset between the second coil and the first coil, and remind the user in case that the position offset is detected. The user may change a position of the second end device or the first end device according to the offset direction and the offset distance in the prompt information, so that the second coil and the first coil are aligned with each other. The charging power of the wireless charging may be maximized only in case that the second coil and the first coil are aligned with each other. Therefore, the technical solution provided by some embodiments of the present disclosure may maximize the charging power by outputting the position-movement prompting information based on the target offset direction and the target offset distance, and the charging power of the wireless charging may be improved.

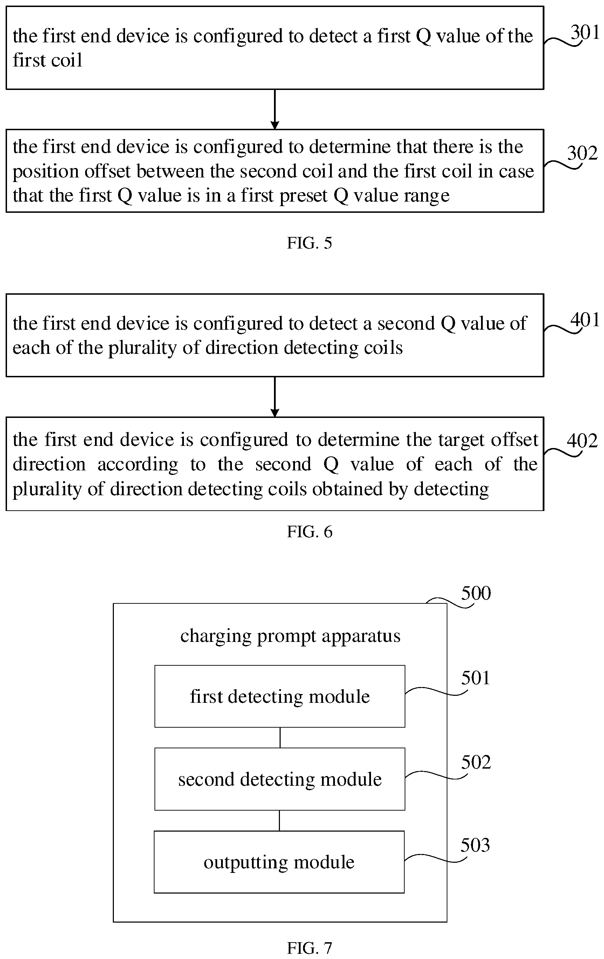

As shown in FIG. 5, in some embodiments of the present disclosure, the technical process of the first end device detecting whether there is a position offset between the second coil and the first coil may include the following operations.

Operation 301, the first end device is configured to detect a first Q value of the first coil.

A Q value is also referred to as a quality factor, which refers to a ratio of an inductive reactance presented by an inductance (a coil is an inductance) when the inductance is excited to generate a resonance to an equivalent loss resistance thereof.

Generally, the inductance may be excited by an alternating current to generate the resonance only in case that the inductance is connected to a capacitor (in parallel or in series) to form a resonant circuit. Therefore, the Q value of the inductance is generally calculated based on the resonant circuit in which the inductance is located. In practical applications, the Q value of the inductance may be calculated by using the following formula: Q=wL/R=1/wRC.

Herein, Q refers to the Q value, w refers to a frequency of the alternating current configured for excitation, L refers to an inductance value of the inductance, R refers to a resistance value of the resistance in series in the resonant circuit, and C refers to a capacitance value of the capacitor in the resonant circuit.

It can be seen from the aforesaid formula that, the first Q value of the first coil is related to the inductance value of the first coil. In practical applications, in case that there is a coil around the first coil (such as the second coil), the first coil will be coupled with the coil that exists around the first coil to generate mutual inductance, thereby causing the inductance value of the first coil to change. In addition, a magnitude of a change of the inductance value of the first coil is also related to a degree of the position offset between the first coil and the coil that exists around. Generally, the greater the degree of the position offset, the smaller the change of the inductance value of the first coil, and the smaller the degree of the position offset, the greater the change of the inductance value of the first coil. Since the first Q value of the first coil is related to the inductance value of the first coil, the change of the inductance value of the first coil will inevitably lead to the changes of the first Q value of the first coil, and a degree of the change of the first Q value of the first coil is related to the degree of the change of the inductance value of the first coil.

Based on the aforesaid principle, in some embodiments of the present disclosure, the first end device may be configured to detect whether there is the position offset between the second coil and the first coil based on the first Q value of the first coil. For this purpose, the first end device may be configured to excite the first coil to generate a resonance, and detect the first Q value of the first coil after the first coil generates the resonance.

Operation 302, the first end device is configured to determine that there is the position offset between the second coil and the first coil in case that the first Q value is in a first preset Q value range.

The first preset Q value range is a range of the Q value of the first coil in case that a coil exists in a preset range around the first coil and there is a position offset between the coil that exists around and the first coil.

In some embodiments, in case that the first Q value is in a third preset Q value range, the first end device is configured to determine that there is no position offset between the second coil and the first coil. The third preset Q value range is a range of the Q value of the first coil in case that a coil exists in the preset range around the first coil and there is no position offset between the coil that exists around and the first coil.

In some embodiments, in case that the first Q value is in a fourth preset Q value range, the first end device is configured to determine that no second coil exists in a preset range around the first end device. The fourth preset Q value range is the range of the Q value of the first coil in case that no coil exists in a preset range around the first coil.

Generally, the third preset Q value range is larger than the first preset Q value range, and the first preset Q value range is larger than the fourth preset Q value range.

Corresponding to the technical process of detecting whether there is a position offset between the second coil and the first coil described aforesaid, a technical process of the first end device obtaining the target offset distance between the second coil and the first coil may include the following operations: the first end device is configured to obtain the target offset distance according to the first Q value.

For example, the first end device may be configured to query a distance database according to the first Q value, and obtain the target offset distance through the query. The distance database stores at least one corresponding relationship between the Q value and the offset distance.

In some embodiments, the corresponding relationship stored in the distance database may be as shown in Table 1.

**Table 1**

| Q value | Offset distance |
|---|---|
| a | X1 |
| b | X2 |
| c | X3 |
| ...... | ...... |

As shown in Table 1, in case that the first Q value is a, the target offset distance X1 may be obtained by querying the distance database.

Of course, in some embodiments of the present disclosure, the distance database may also store at least one corresponding relationship between the Q value range and the offset distance.

In some embodiments, the corresponding relationship stored in the distance database may be as shown in Table 2.

**Table 2**

| Q value range | Offset distance |
|---|---|
| [a,b] | X1 |
| [c,d] | X2 |
| [e,f] | X3 |
| ...... | ...... |

As shown in Table 2, if the first Q value is in a range of [a, b], the target offset distance X1 may be obtained by querying the distance database.

In some embodiments, an offset distance calculation function may be arranged in the first end device, and the first end device may substitute the first Q value into the offset distance calculation function to calculate the target offset distance. The embodiments of the present disclosure do not define the specific technical process of calculating the target offset distance.

As shown in FIG. 6, in some embodiments of the present disclosure, the technical process of the first end device detecting the target offset direction of the second coil relative to the first coil may include the following operations.

Operation 401, the first end device is configured to detect a second Q value of each of the plurality of direction detecting coils.

In some embodiments of the present disclosure, the first end device may excite each of the plurality of direction detecting coils to generate a resonance. For each direction detecting coil, after the direction detecting coil generates the resonance, the first end device may be configured to detect the second Q value of the direction detecting coil.

Operation 402, the first end device is configured to determine the target offset direction according to the second Q value of each of the plurality of direction detecting coils obtained by detecting.

In some embodiments of the present disclosure, the first end device may be configured to screen one or more target Q values from the second Q value of each of the plurality of direction detecting coils. Each of the one or more target Q values is in a second preset Q value range. The second preset Q value range is a range of the Q value of each of the plurality of direction detecting coils in case that a coil exists in a preset range around the each of the plurality of direction detecting coils.

It can be seen from the aforesaid description that the second coil exists in the preset range around the direction detecting coil corresponding to the target Q value. In some embodiments of the present disclosure, the first end device may be configured to determine the target offset direction according to one or more arranging orientations of one or more of the plurality of direction detecting coils corresponding to the one or more target Q values relative to the first coil.

In some embodiments, in case that the number of the one or more target Q values is 1, the number of the one or more of the plurality of direction detecting coils corresponding to the one or more target Q values is also 1. That is, the number of the one or more of the plurality of direction detecting coils having the second coil existing around is 1. In this case, the first end device may be configured to take a first arranging orientation of one of the plurality of direction detecting coils corresponding to the one target Q value relative to the first coil as the target offset direction.

In some embodiments, in case that the number of the one or more target Q values is greater than 1, the number of one or more of the plurality of direction detecting coils corresponding to the one or more target Q values is also greater than 1 (that is, at least two). That is, there are at least two of the plurality of direction detecting coils having the second coil existing around. In this case, the first end device may be configured to determine second arranging orientations of the at least two of the plurality of direction detecting coils corresponding to the one or more target Q values relative to the first coil, and determine the target offset direction according to the second arranging orientations of the at least two of the plurality of direction detecting coils.

In some embodiments, the first end device may be configured to take an orientation between the second arranging orientations of the at least two of the plurality of direction detecting coils as the target offset direction. For example, in case that the second arranging orientations of the at least two of the plurality of direction detecting coils is left and upper respectively, the first end device may be configured to take upper left as the target offset direction.

In some embodiments, the first end device may be configured to determine a target second arranging orientation from the second arranging orientations of the at least two of the plurality of direction detecting coils based on the one or more target Q values, and take the target second arranging orientation as the target offset direction.

For example, the first end device may be configured to determine a maximum target Q value from the one or more target Q values, and take the second arranging orientation of one of the plurality of direction detecting coils corresponding to the maximum target Q value (that is, the target second arranging orientation) as the target offset direction relative to the first coil.

In some embodiments, the first end device may be configured to calculate the target offset direction based on a preset direction calculation formula by using the second arranging orientations and the one or more target Q values corresponding to the second arranging orientations.

For example, independent variables of the direction calculation formula may be an orientation expression value corresponding to each second arranging orientation and the target Q value corresponding to each second arranging orientation, and dependent variables of the direction calculation formula may be an orientation expression value corresponding to the target offset direction. In this way, the orientation expression value corresponding to the target offset direction may be calculated according to the direction calculation formula, and the first end device may be configured to determine the target offset direction according to the orientation expression value corresponding to the target offset direction.

It should be noted that, in the charging prompt method provided by some embodiments of the present disclosure, the first end device may be configured to detect whether there is the position offset between the first coil and the second coil based on the first Q value. Besides, the first end device may also be configured to obtain the target offset distance between the first coil and the second coil based on the first Q value. In addition, the first end device may also be configured to detect the target offset direction of the second coil relative to the first coil based on the second Q value of each of the plurality of direction detecting coils. The first Q value and each second Q value may be detected before the first coil transmits the alternating magnetic field, that is, the first Q value and each second Q value may be detected before the wireless charging. In this way, the first end device may prompt the user to move the second end device before a start of the wireless charging, so that a maximum charging power may be achieved at a beginning of the wireless charging.

As shown in FIG. 7, FIG. 7 is the block diagram of a charging prompt apparatus 500 provided by some embodiments of the present disclosure. The charging prompt apparatus 500 may be configured in the first end device of the implementation environment shown in FIG. 1. As shown in FIG. 7, the charging prompt apparatus 500 may include a first detecting module 501, a second detecting module 502, and an outputting module 503.

The first detecting module 501 is configured to detect whether there is a position offset between the second coil and the first coil.

The second detecting module 502 is configured to obtain a target offset distance between the second coil and the first coil and detect a target offset direction of the second coil relative to the first coil by using a plurality of direction detecting coils in case that there is the position offset between the second coil and the first coil.

The outputting module 503 is configured to output position-movement prompting information according to the target offset direction and the target offset distance, and the position-movement prompting information is configured to prompt a user to move the second end device or the first end device based on the target offset distance and the target offset direction.

In some embodiments of the present disclosure, the first detecting module 501 is specifically configured to detect a first Q value of the first coil, and determine that there is the position offset between the second coil and the first coil in case that the first Q value is in a first preset Q value range. The first preset Q value range is a range of a Q value of the first coil in case that a coil exists in a preset range around the first coil and there is a position offset between the coil that exists around and the first coil.

In some embodiments of the present disclosure, the second detecting module 502 is specifically configured to obtain the target offset distance according to the first Q value.

In some embodiments of the present disclosure, the second detecting module 502 is specifically configured to detect a second Q value of each of the plurality of direction detecting coils; and determine the target offset direction according to the second Q value of each of the plurality of direction detecting coils obtained by detecting.

In some embodiments of the present disclosure, the second detecting module 502 is specifically configured to screen one or more target Q values from the second Q value of each of the plurality of direction detecting coils, and determine the target offset direction according to one or more arranging orientations of one or more of the plurality of direction detecting coils corresponding to the one or more target Q values relative to the first coil. Herein, each of the one or more target Q values is in a second preset Q value range, and the second preset Q value range is a range of a Q value of each of the plurality of direction detecting coils in case that a coil in a preset range around the each of the plurality of direction detecting coils.

In some embodiments of the present disclosure, the second detecting module 502 is specifically configured to determine a first arranging orientation of one of the plurality of direction detecting coils corresponding to the one or more target Q values relative to the first coil in case that the number of the one or more target Q values is 1, and take the first arranging orientation as the target offset direction; and determine second arranging orientations of at least two of the plurality of direction detecting coils corresponding to the one or more target Q values relative to the first coil in case that the number of the one or more target Q values is greater than 1, and determine the target offset direction according to the second arranging orientations of the at least two of the plurality of direction detecting coils.

In some embodiments of the present disclosure, the second detecting module 502 is specifically configured to take an orientation between the second arranging orientations of the at least two of the plurality of direction detecting coils as the target offset direction; or determine a target second arranging orientation from the second arranging orientations of the at least two of the plurality of direction detecting coils according to each of the one or more target Q values, and take the target second arranging orientation as the target offset direction; or calculate the target offset direction based on a preset direction calculation formula by using the second arranging orientations and the one or more target Q values corresponding to the second arranging orientations.

In some embodiments of the present disclosure, the second detecting module 502 is specifically configured to detect the target offset direction in case that the target offset distance is greater than a preset distance threshold.

The charging prompt apparatus provided by some embodiments of the present disclosure may execute the aforesaid method embodiments. The implementation principle and technical effect are similar, which are not repeated herein.

The specific definition of the charging prompt apparatus may refer to the definition of the charging prompt method described aforesaid, which is not repeated herein. Each of the modules in the charging prompt apparatus may be realized in whole or in part by a software, a hardware, and a combination thereof. Each of the aforesaid modules may be embedded in or independent of a processor of an electronic device in a form of hardware, or may be stored in a memory of the electronic device in a form of software, so that the processor may call and execute corresponding operations of corresponding to each of the aforesaid modules.

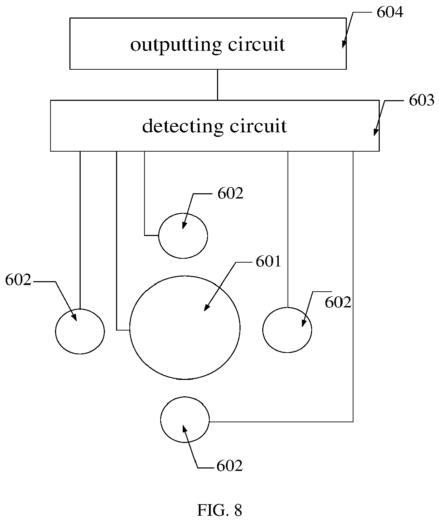

As shown in FIG. 8, FIG. 8 is a block diagram of the first end device provided by some embodiments of the present disclosure. As shown in FIG. 8, the first end device includes a first coil 601 configured to transfer electric energy, a plurality of direction detecting coils 602 (only four direction detecting coils 602 are shown in FIG. 8 by example), a detecting circuit 603, and an outputting circuit 604.

As described aforesaid, the direction detecting coil 602 is different from the first coil 601 in that the direction detecting coil 602 is not configured to transmit the electric energy to the second end device.

In some embodiments, the plurality of direction detecting coils 602 are arranged around the first coil 601, and arranging orientations of the plurality of direction detecting coils 602 relative to the first coil 601 are different from each other. In other words, the plurality of direction detecting coils 602 are uniformly arranged around the first coil 601 with the first coil 601 as a geometric center. As shown in FIG. 8, the first end device may include four direction detecting coils 602, one direction detecting coil 602 is arranged above the first coil 601, one direction detecting coil 602 is arranged below the first coil 601, one direction detecting coil 602 is arranged on the left of the first coil 601, and one direction detecting coil 602 is arranged on the right of the first coil 601.

In some embodiments, the sizes of the plurality of direction detecting coils 602 may be the same as each other. In some embodiments, a size of each of the plurality of direction detecting coils 602 may be smaller than a size of the first coil 601. In some embodiments of the present disclosure, the distances between the first coil 601 and the plurality of direction detecting coils 602 and are the same as each other, and a distance between coils may refer to a distance between central axes of the coils. Of course, in some embodiments of the present disclosure, the distances between the first coil 601 and the plurality of direction detecting coils 602 may also be different from each other.

As shown in FIG. 8, the first coil 601 and the plurality of direction detecting coils 602 are connected to the detecting circuit 603. The detecting circuit 603 is connected to the outputting circuit 604.

The detecting circuit 603 is configured to detect a first Q value of the first coil 601 and a second Q value of each of the plurality of direction detecting coils 602. The detecting circuit 603 is also configured to detect whether there is a position offset between the second coil and the first coil 601 according to the first Q value. In case that there is the position offset between the second coil and the first coil 601, the detecting circuit 603 is further configured to obtain a target offset distance between the second coil and the first coil 601 according to the first Q value, and detect a target offset direction of the second coil relative to the first coil 601 according to the second Q value of each of the plurality of direction detecting coils 602.

The outputting circuit 604 is configured to output position-movement prompting information under a control of the detecting circuit 603. The position-movement prompting information is configured to prompt a user to move the second end device or the first end device based on the target offset distance and the target offset direction.

It should be noted that, the detection circuit 603 detects whether there is a position offset between the second coil and the first coil 601, obtains a target offset distance between the second coil and the first coil 601, and detects a target offset direction of the second coil relative to the first coil 601 in manners similar to the aforesaid embodiments, and the following is a relatively brief description thereof in some embodiments of the present disclosure. Please refer to the content of the method embodiments of the present disclosure for details.

In some embodiments of the present disclosure, the detecting circuit 603 is specifically configured to determine that there is the position offset between the second coil and the first coil 601 in case that the first Q value is in a first preset Q value range. The first preset Q value range is a range of a Q value of the first coil in case that a coil exists in a preset range around the first coil and there is a position offset between the coil that exists around and the first coil.

In some embodiments of the present disclosure, the detecting circuit 603 is specifically configured to obtain the target offset distance according to the first Q value.

In some embodiments of the present disclosure, the detecting circuit 603 is specifically configured to screen one or more target Q values from the second Q value of each of the plurality of detected direction detecting coils 602, and determine the target offset direction according to one or more arranging orientations of one or more of the plurality of direction detecting coils 602 corresponding to the one or more target Q values relative to the first coil 601. Herein, each of the one or more target Q values is in a second preset Q value range, and the second preset Q value range is a range of a Q value of each of the plurality of direction detecting coils 602 in case that a coil exists in a preset range around the each of the plurality of direction detecting coils 602.

In some embodiments of the present disclosure, the detecting circuit 603 is specifically configured to determine a first arranging orientation of one of the plurality of direction detecting coils 602 corresponding to the one or more target Q values relative to the first coil 601 in case that the number of the one or more target Q values is 1, and take the first arranging orientation as the target offset direction; and determine second arranging orientations of at least two of the plurality of direction detecting coils 602 corresponding to the one or more target Q values relative to the first coil 601 in case that the number of the one or more target Q values is greater than 1, and determine the target offset direction according to the second arranging orientations of the at least two of the plurality of direction detecting coils 602.

In some embodiments of the present disclosure, the detecting circuit 603 is specifically configured to take an orientation between the second arranging orientations of the at least two of the plurality of direction detecting coils as the target offset direction; or determine a target second arranging orientation from the second arranging orientations of the at least two of the plurality of direction detecting coils according to each of the one or more target Q values, and take the target second arranging orientation as the target offset direction; or calculate the target offset direction based on a preset direction calculation formula by using the second arranging orientations and the one or more target Q values corresponding to the second arranging orientations.

In some embodiments of the present disclosure, the detecting circuit 603 is specifically configured to detect the target offset direction according to the second Q value of each of the plurality of direction detecting coils in case that the target offset distance is greater than a preset distance threshold.

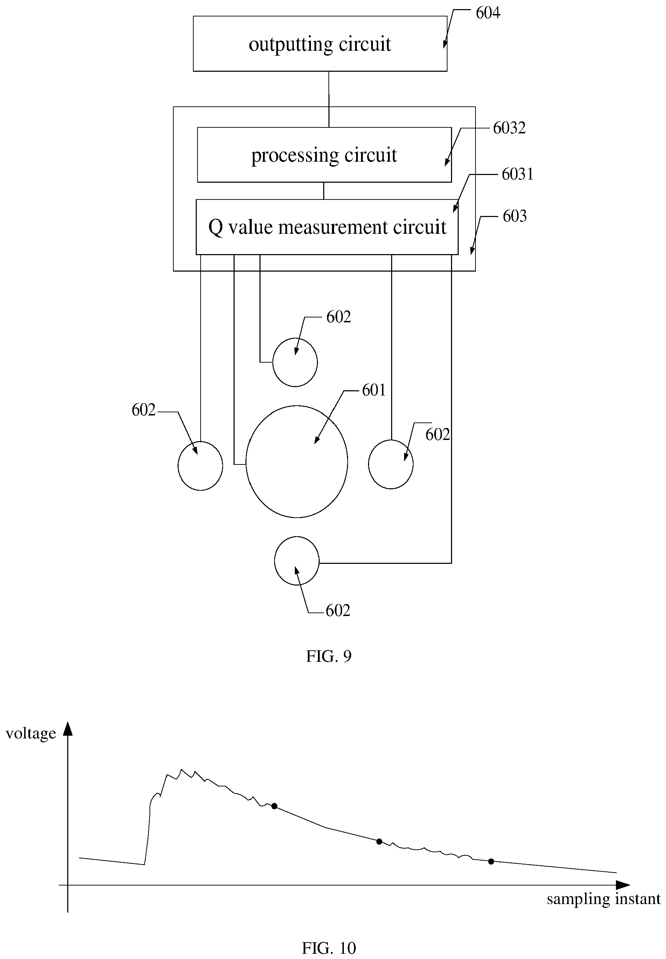

As shown in FIG. 9, in some embodiments of the present disclosure, the detecting circuit 603 may include one or more Q value measurement circuits 6031 and a processing circuit 6032 connected to each other. The one or more Q value measurement circuits 6031 are connected to the first coil 601 and the plurality of direction detecting coils 602. The processing circuit 6032 is connected to the outputting circuit 604.

The one or more Q value measurement circuits 6031 are configured to excite the first coil 601 and each of the plurality of direction detecting coils 602 to generate resonances, sample voltages at two ends of the first coil 601 and voltages at two ends of each of the plurality of direction detecting coils 602 after the first coil 601 and each of the plurality of direction detecting coils 602 generate the resonances, and output sampling results to the processing circuit 6032.

The processing circuit 6032 is configured to acquire the first Q value and the second Q value of each of the plurality of direction detecting coils 602 according to the sampling results. The processing circuit 6032 is further configured to detect whether there is the position offset between the second coil and the first coil 601 according to the first Q value. In case that there is the position offset between the second coil and the first coil 601, the processing circuit 6032 is further configured to obtain the target offset distance according to the first Q value, and detect the target offset direction according to the second Q value of each of the plurality of direction detecting coils 602. The processing circuit 6032 is further configured to control the outputting circuit 604 to output the position-movement prompting information.

In some embodiments of the present disclosure, the processing circuit 6032 may also be connected to the first coil 601. The processing circuit 6032 is further configured to control the first coil 601 to transmit an alternating magnetic field under a drive of an alternating current.

In some embodiments of the present disclosure, the sampling results outputted by the one or more Q value measurement circuits 6031 to the processing circuit 6032 may be voltage resonant waveforms corresponding to the first coil 601 and each of the plurality of direction detecting coils 602. An x-axis coordinate of any point in each voltage resonant waveform is a sampling instant of the corresponding point, and a y-axis coordinate is a voltage of the corresponding point. As shown in FIG. 10, FIG. 10 shows an exemplary voltage resonant waveform.

After receiving a voltage resonant waveform corresponding to the first coil 601, the processing circuit 6032 may be configured to determine at least one point from the voltage resonant waveform, and acquire the first Q value based on the voltage and the sampling instant corresponding to the at least one point. For example, as shown in FIG. 10, the processing circuit 6032 may be configured to determine three points from the voltage resonant waveform, and time intervals between the sampling instants corresponding to any two adjacent points of the three points are the same as each other.

Similarly, after receiving a voltage resonant waveform corresponding to one of the plurality of direction detecting coils 602, the processing circuit 6032 may be configured to determine at least one point from the voltage resonant waveform, and acquire the second Q value of the direction detecting coil 602 based on the voltage and the sampling instant corresponding to the at least one point. For example, as shown in FIG. 10, the processing circuit 6032 may be configured determine three points from the voltage resonant waveform, and time intervals between the sampling instants corresponding to any two adjacent points of the three points are the same as each other.

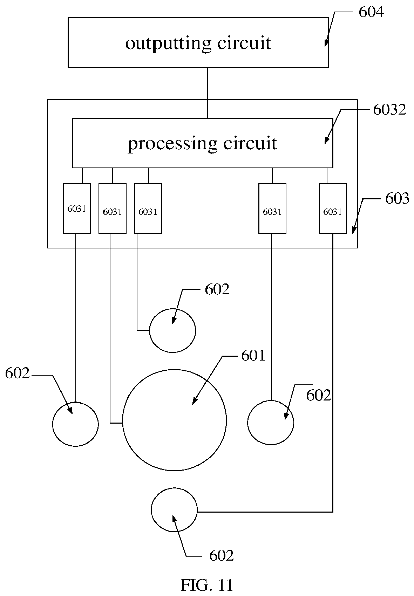

As shown in FIG. 11, in some embodiments of the present disclosure, the detecting circuit 603 may include a plurality of Q value measurement circuits 6031. Each of the plurality of Q value measurement circuits 6031 is connected to the processing circuit 6032. Each of the plurality of Q value measurement circuits 6031 is connected to one of each of the plurality of direction detecting coils 6032 and the first coil 6031 arranged in the first end device. The plurality of Q value measurement circuits 6031 are connected to different coils. In other words, any one of the plurality of direction detecting coils 602 and the first coil 601 arranged in the first end device is connected to a corresponding one of the plurality of Q value measurement circuits 6031.

In a case corresponding to FIG. 11, each of the plurality of Q value measurement circuits 6031 is configured to excite a target coil to generate a resonance, sample voltages at two ends of the target coil after the target coil generates the resonance, and output sampling results to the processing circuit 6032. The target coil is one of the plurality of direction detecting coils 602 or the first coil 601 that is connected to the each of the plurality of Q value measurement circuits 6031.

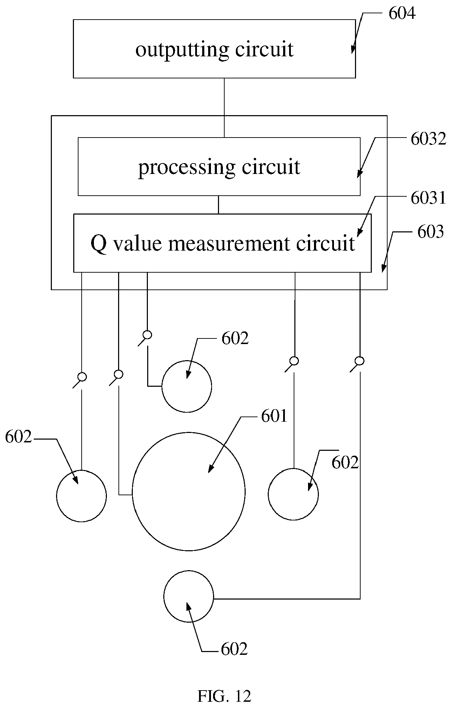

As shown in FIG. 12, in some embodiments of the present disclosure, the detecting circuit 603 may include one Q value measurement circuit 6031. The one Q value measurement circuit 6031 is connected to the first coil 601 and each of the plurality the direction detecting coils 602 in a time-sharing mode. That is, the one Q value measurement circuit 6031 may only be connected to one coil at one moment, and the one coil may be the first coil 601, or one of the plurality of direction detecting coils 602. In some embodiments of the present disclosure, a time-sharing connection between the one Q value measurement circuit 6031 and each of the first coil 601 and the plurality the direction detecting coils 602 may be realized by using a switch. For example, as shown in FIG. 12, a switch is arranged between the one Q value measurement circuit and the one coil selected from the first coil 6031 and the plurality of the direction detecting coils 602. Only one switch is allowed to be switched on at one moment, and all other switches are switched off.

In a case corresponding to FIG. 12, the one Q value measurement circuit 6031 is configured to excite a target coil at a current moment to generate a resonance, sample voltages at two ends of the target coil at the current moment after the target coil at the current moment generates the resonance, and output sampling results to the processing circuit 6032.

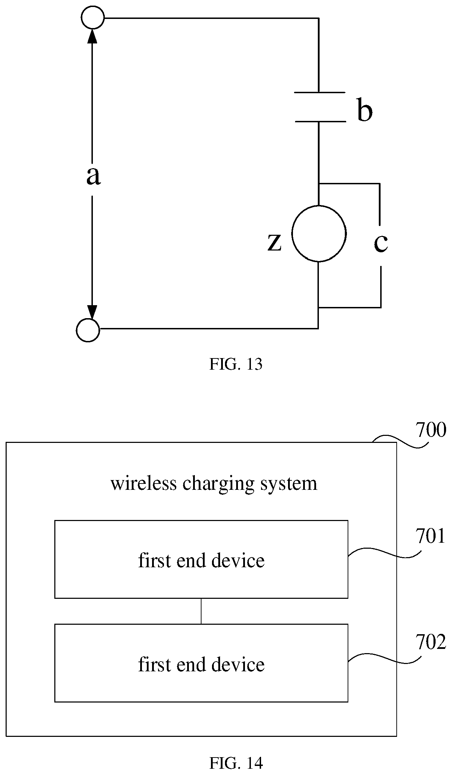

As shown in FIG. 13, in some embodiments of the present disclosure, each Q value measurement circuit 6031 may include an exciting power supply for an alternating current, a capacitor b, and a voltage sampling circuit c.

The capacitor b is connected to the target coil z. As described aforesaid, the target coil z refers to a coil connected to the Q value measurement circuit 6031. The target coil z may be the first coil 601 or one of the plurality of direction detecting coils 602. It should be noted that, although FIG. 13 shows that the capacitor b and the target coil z are connected in series, in practical applications, the capacitor b and the target coil z may also be connected in parallel.

The exciting power supply for the alternating current is configured to output an alternating current to the capacitor b and the target coil z, and the alternating current is configured to excite the target coil to generate the resonance. For example, the alternating current may be an alternating current of ± 3 V.

The voltage sampling circuit c is connected to the target coil z to sample the voltages at two ends of the target coil z and output the sampling results to the processing circuit 6032. In some embodiments, the voltage sampling circuit c may be connected in parallel with the target coil z.

In some embodiments of the present disclosure, each Q value measurement circuit 6031 may also include a resistance. The resistance is connected to the capacitor b and the target coil z. In case that the capacitor b and the target coil z are connected in series, the resistance is also connected to the capacitor b and the target coil z in series. In case that the capacitor b and the target coil z are connected in parallel, the resistance is connected in series with a parallel connection of the capacitor b and the target coil z.

As shown in FIG. 14, the embodiments of the present disclosure further provide a wireless charging system 700. The wireless charging system 700 includes a second end device 702 and the first end device 701 described aforesaid.

In some embodiments of the present disclosure, a non-transitory computer-readable storage medium is provided. A computer program is stored on the non-transitory computer-readable storage medium. In response to being executed by a processor, the computer program executes the following operations: detecting whether there is a position offset between the second coil and the first coil; obtaining a target offset distance between the second coil and the first coil in case that there is the position offset between the second coil and the first coil, and detecting a target offset direction of the second coil relative to the first coil by using the plurality of direction detecting coils in case that there is the position offset between the second coil and the first coil; and outputting position-movement prompting information according to the target offset direction and the target offset distance. Herein, the position-movement prompting information is configured to prompt a user to move the second end device or the first end device based on the target offset distance and the target offset direction.

In some embodiments of the present disclosure, in response to being executed by the processor, the computer program executes the following operations: detecting a first Q value of the first coil; and determining that there is the position offset between the second coil and the first coil in case that the first Q value is in a first preset Q value range. The first preset Q value range is a range of a Q value of the first coil in case that a coil exists in a preset range around the first coil and there is a position offset between the coil that exists around and the first coil.

In some embodiments of the present disclosure, in response to being executed by the processor, the computer program executes the following operations: obtaining the target offset distance according to the first Q value.

In some embodiments of the present disclosure, in response to being executed by the processor, the computer program executes the following operations: detecting a second Q value of each of the plurality of direction detecting coils; and determining the target offset direction according to the second Q value of each of the plurality of direction detecting coils obtained by detecting.

In some embodiment of the present disclosure, in response to being executed by the processor, the computer program executes the following operations: screening one or more target Q values from the second Q value of each of the plurality of direction detecting coils, and determining the target offset direction according to one or more arranging orientations of one or more of the plurality of direction detecting coils corresponding to the one or more target Q values relative to the first coil. Herein, each of the one or more target Q values is in a second preset Q value range. The second preset Q value range is a range of a Q value of each of the plurality of direction detecting coils in case that a coil exists in a preset range around the each of the plurality of direction detecting coils.

In some embodiments of the present disclosure, in response to being executed by the processor, the computer program executes the following operations: determining a first arranging orientation of one of the plurality of direction detecting coils corresponding to the one or more target Q values relative to the first coil in case that the number of the one or more target Q values is 1, and taking the first arranging orientation as the target offset direction; and determining second arranging orientations of at least two of the plurality of direction detecting coils corresponding to the one or more target Q values relative to the first coil in case that the number of the one or more target Q values is greater than 1, and determining the target offset direction according to the second arranging orientations of the at least two of the plurality of direction detecting coils.

In some embodiments of the present disclosure, in response to being executed by the processor, the computer program executes the following operations: taking an orientation between the second arranging orientations of the at least two of the plurality of direction detecting coils as the target offset direction; or determining a target second arranging orientation from the second arranging orientations of the at least two of the plurality of direction detecting coils according to each of the one or more target Q values, and taking the target second arranging orientation as the target offset direction; or calculating the target offset direction based on a preset direction calculation formula by using the second arranging orientations and the one or more target Q values corresponding to the second arranging orientations.

In some embodiments of the present disclosure, in response to being executed by the processor, the computer program executes the following operations: detecting the target offset direction in case that the target offset distance is greater than a preset distance threshold.

The implementation principle and technical effect of the computer-readable storage medium provided by some embodiments are similar to those of the aforesaid method embodiments, which are not be repeated herein.

Any reference to memory, storage, database or other media used in the embodiments provided by the present disclosure may include at least one of non-volatile and volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a random access memory (RAM) or an external cache memory. As an illustration rather than a limitation, the RAM is available in many forms, such as a static RAM (SRAM), a dynamic RAM (DRAM), a synchronous DRAM (SDRAM), a dual data rate SDRAM (DDRSDRAM), an enhanced SDRAM (ESDRAM), a synchronous link DRAM (SLDRAM), a Rambus direct RAM (RDRAM), a direct Rambus dynamic RAM (DRDRAM), and a Rambus dynamic RAM (RDRAM).

The technical features of the above embodiments may be arbitrarily combined. All possible combinations of the technical features of the above embodiments have not been described for a concise description. However, the combination of these technical features should be considered as the scope of the description as long as there is no contradiction.

The above embodiments are only several embodiments of the present disclosure that have relatively specific and detailed description, and should not be understood as a limitation on the scope of the present disclosure. It should be noted that, for those skilled in the art, some modifications and improvements may be obtained without departing from the concept of the present disclosure, these modifications and improvements belong to the protection scope of the present disclosure. Therefore, the protection scope of the present disclosure shall be subject to the appended claims. Embodiments unrelated to claims do not form describing part of the present invention.

## Claims

1. A charging prompt method for a first end device (101) of a wireless charging system, wherein the wireless charging system comprises the first end device (101) and a second end device (102), the first end device (101) is one of a receiving-end device and a transmitting-end device, the second end device (102) is the other of the receiving-end device and the transmitting-end device, the first end device (101) comprises a first coil (601) configured to transfer electric energy and a plurality of direction detecting coils (602) around the first coil (601), the second end device (102) comprises a second coil configured to transfer the electric energy, and the method comprises:
detecting (201) whether a position offset exists between the second coil and the first coil (601);
obtaining (202) a target offset distance between the second coil and the first coil (601) and detecting a target offset direction of the second coil relative to the first coil (601) by using the plurality of direction detecting coils (602) in response to detecting that the position offset exists between the second coil and the first coil (601); and
outputting (203) position-movement prompting information according to the target offset direction and the target offset distance, and the position-movement prompting information being configured to prompt a user to move the second end device (102) or the first end device (101) based on the target offset distance and the target offset direction.

2. The method according to claim 1, wherein the detecting whether a position offset exists between the second coil and the first coil (601) comprises:
detecting (301) a first Q value of the first coil (601); and
determining (302) that the position offset exists between the second coil and the first coil (601) in response to the first Q value being in a first preset Q value range;
wherein the first preset Q value range is a range of a Q value of the first coil (601) in response to a coil existing in a preset range around the first coil (601) and a position offset existing between the coil that exists around and the first coil (601), and the first Q value is a quality factor.

3. The method according to claim 2, wherein the obtaining a target offset distance between the second coil and the first coil (601) comprises:
obtaining the target offset distance according to the first Q value.

4. The method according to any one of claims 1-3, wherein the detecting a target offset direction of the second coil relative to the first coil (601) by using the plurality of direction detecting coils (602) comprises:
detecting (401) a second Q value of each of the plurality of direction detecting coils (602); and
determining (402) the target offset direction according to the second Q value of each of the plurality of direction detecting coils (602) obtained by detecting;
wherein the second Q value is a quality factor.

5. The method according to claim 4, wherein the determining the target offset direction according to the second Q value of each of the plurality of direction detecting coils (602) obtained by detecting comprises:
screening one or more target Q values from the second Q value of each of the plurality of direction detecting coils (602), each of the one or more target Q values being in a second preset Q value range, and the second preset Q value range being a range of a Q value of each of the plurality of direction detecting coils (602) in response to a coil existing in a preset range around the each of the plurality of direction detecting coils (602); and
determining the target offset direction according to one or more arranging orientations of one or more of the plurality of direction detecting coils (602) corresponding to the one or more target Q values relative to the first coil (601).

6. The method according to claim 5, wherein the determining the target offset direction according to one or more arranging orientations of one or more of the plurality of direction detecting coils (602) corresponding to the one or more target Q values relative to the first coil (601) comprises:
determining a first arranging orientation of one of the plurality of direction detecting coils (602) corresponding to the one or more target Q values relative to the first coil (601) in response to the number of the one or more target Q values being 1, and taking the first arranging orientation as the target offset direction; and
determining second arranging orientations of at least two of the plurality of direction detecting coils (602) corresponding to the one or more target Q values relative to the first coil (601) in response to the number of the one or more target Q values being greater than 1, and determining the target offset direction according to the second arranging orientations of the at least two of the plurality of direction detecting coils (602).

7. The method according to claim 6, wherein the determining the target offset direction according to the second arranging orientations of the at least two of the plurality of direction detecting coils (602) comprises:
taking an orientation between the second arranging orientations of the at least two of the plurality of direction detecting coils (602) as the target offset direction; or
determining a target second arranging orientation from the second arranging orientations of the at least two of the plurality of direction detecting coils (602) according to the one or more target Q values, and taking the target second arranging orientation as the target offset direction; or
calculating the target offset direction based on a preset direction calculation formula by using the second arranging orientations and the one or more target Q values corresponding to the second arranging orientations.

8. The method according to any one of claims 1-7, wherein the detecting a target offset direction of the second coil relative to the first coil (601) comprises:
detecting the target offset direction in response to the target offset distance being greater than a preset distance threshold.

9. A first end device (101), comprising a first coil (601) configured to transfer electric energy, a plurality of direction detecting coils (602), a detecting circuit (603), and an outputting circuit (604), wherein the plurality of direction detecting coils (602) are arranged around the first coil (601), the first coil (601) and the plurality of direction detecting coils (602) are connected to the detecting circuit (603), and the detecting circuit (603) is connected to the outputting circuit (604);
the detecting circuit (603) is configured to:
detect a first Q value of the first coil (601) and a second Q value of each of the plurality of direction detecting coils (602);
determine whether a position offset exists between the first coil (601) and a second coil of a second end device (102) according to the first Q value, the second coil being configured to transfer electric energy;
obtain a target offset distance between the second coil and the first coil (601) according to the first Q value and determine a target offset direction of the second coil relative to the first coil (601) according to the second Q value of each of the plurality of direction detecting coils (602) in response to detecting that the position offset exists between the second coil and the first coil (601); and
the outputting circuit (604) is configured to output position-movement prompting information under a control of the detecting circuit (603), and the position-movement prompting information is configured to prompt a user to move the second end device (102) or the first end device (101) based on the target offset distance and the target offset direction; each of the first Q value and the second Q value is a quality factor.

10. The first end device (101) according to claim 9, wherein the detecting circuit (603) comprises one or more Q value measurement circuits (6031) and a processing circuit (6032) connected to each other, the one or more Q value measurement circuits (6031) are connected to the first coil (601) and the plurality of direction detecting coils (602), and the processing circuit (6032) is connected to the outputting circuit (604);
the one or more Q value measurement circuits (6031) are configured to excite the first coil (601) and each of the plurality of direction detecting coils (602) to generate resonances, sample voltages at two ends of the first coil (601) and each of the plurality of direction detecting coils (602) after the first coil (601) and each of the plurality of direction detecting coils (602) generate the resonances, and output sampling results to the processing circuit (6032);
the processing circuit (6032) is configured to:
acquire the first Q value and the second Q value of each of the plurality of direction detecting coils (602) according to the sampling results;
determine whether the position offset exists between the second coil and the first coil (601) according to the first Q value;
obtain the target offset distance according to the first Q value and determine the target offset direction according to the second Q value of each of the plurality of direction detecting coils (602) in response to detecting that the position offset exists between the second coil and the first coil (601); and
control the outputting circuit (604) to output the position-movement prompting information.

11. The first end device (101) according to claim 10, wherein the one or more Q value measurement circuits (6031) comprise a plurality of Q value measurement circuits (6031), each of the plurality of Q value measurement circuits (6031) is connected to the processing circuit (6032), and each of the plurality of Q value measurement circuits (6031) is connected to one of each of the plurality of direction detecting coils (602) and the first coil (601); and
each of the plurality of Q value measurement circuits (6031) is configured to excite a target coil to generate a resonance, sample voltages at two ends of the target coil after the target coil generates the resonance, and output sampling results to the processing circuit (6032), and wherein the target coil is one of the plurality of direction detecting coils (602) or the first coil (601) that is connected to the each of the plurality of Q value measurement circuits (6031).

12. The first end device (101) according to claim 10 or 11, wherein the one or more Q value measurement circuits (6031) comprise one Q value measurement circuit (6031), the one Q value measurement circuit (6031) is connected to the first coil (601) and each of the plurality of direction detecting coils (602) in a time-sharing mode;
the one Q value measurement circuit (6031) is configured to excite a target coil at a current moment to generate a resonance, sample voltages at two ends of the target coil at the current moment after the target coil at the current moment generates the resonance, and output sampling results to the processing circuit (6032), and wherein the target coil is one of the plurality of direction detecting coils (602) or the first coil (601) that is connected to the one Q value measurement circuit (6031).

13. The first end device (101) according to claim 11 or 12, wherein each of the one or more Q value measurement circuits (6031) comprises an exciting power supply (a) for an alternating current, a capacitor (b), and a voltage sampling circuit (c);
the capacitor (b) is connected to the target coil, the exciting power supply (a) for the alternating current is configured to output the alternating current to the capacitor (b) and the target coil, and the alternating current is configured to excite the target coil to generate the resonance;
the voltage sampling circuit (c) is connected to the target coil and configured to sample the voltages at two ends of the target coil and output the sampling results to the processing circuit (6032).

14. The first end device (101) according to any one of claims 9-13, wherein distances between the first coil (601) and the plurality of direction detecting coils (602) are the same as each other.

15. A non-transitory computer-readable storage medium storing a computer program, **characterized in that**, in response to the computer program being executed by a processor, the charging prompt method according to any one of claims 1-8 is executed.

## Patentansprüche

1. Aufladeaufforderungsverfahren für ein erstes Endgerät (101) eines drahtlosen Ladesystems, wobei das drahtlose Ladesystem das erste Endgerät (101) und ein zweites Endgerät (102) umfasst, wobei das erste Endgerät (101) eines eines empfangsseitigen Geräts und eines sendeseitigen Geräts ist, wobei das zweite Endgerät (102) das andere des empfangsseitigen Geräts und des sendeseitigen Geräts ist, wobei das erste Endgerät (101) eine erste Spule (601), die dazu konfiguriert ist, elektrische Energie zu übertragen, und eine Mehrzahl von Richtungsdetektionsspulen (602) um die erste Spule (601) umfasst, wobei das zweite Endgerät (102) eine zweite Spule umfasst, die dazu konfiguriert ist, die elektrische Energie zu übertragen, und wobei das Verfahren Folgendes umfasst:
Detektieren (201), ob ein Positionsversatz zwischen der zweiten Spule und der ersten Spule (601) vorhanden ist;
Erhalten (202) einer Zielversatzdistanz zwischen der zweiten Spule und der ersten Spule (601) und Detektieren einer Zielversatzrichtung der zweiten Spule relativ zur ersten Spule (601) unter Verwendung der Mehrzahl von Richtungsdetektionsspulen (602) in Reaktion auf ein Detektieren, dass der Positionsversatz zwischen der zweiten Spule und der ersten Spule (601) vorhanden ist; und
Ausgeben (203) von Positionsbewegungsaufforderungsinformationen gemäß der Zielversatzrichtung und der Zielversatzdistanz, und wobei die Positionsbewegungsaufforderungsinformationen dazu konfiguriert sind, einen Benutzer aufzufordern, das zweite Endgerät (102) oder das erste Endgerät (101) basierend auf der Zielversatzdistanz und der Zielversatzrichtung zu bewegen.

2. Verfahren nach Anspruch 1, wobei das Detektieren, ob ein Positionsversatz zwischen der zweiten Spule und der ersten Spule (601) vorhanden ist, Folgendes umfasst:
Detektieren (301) eines ersten Q-Werts der ersten Spule (601); und
Bestimmen (302), dass der Positionsversatz zwischen der zweiten Spule und der ersten Spule (601) vorhanden ist, in Reaktion darauf, dass der erste Q-Wert in einem ersten voreingestellten Q-Wertbereich liegt;
wobei der erste voreingestellte Q-Wertbereich ein Bereich eines Q-Werts der ersten Spule (601) in Reaktion darauf ist, dass eine Spule in einem voreingestellten Bereich um die erste Spule (601) vorhanden ist und ein Positionsversatz zwischen der darum vorhandenen Spule und der ersten Spule (601) vorhanden ist, und wobei der erste Q-Wert ein Qualitätsfaktor ist.

3. Verfahren nach Anspruch 2, wobei das Erhalten einer Zielversatzdistanz zwischen der zweiten Spule und der ersten Spule (601) Folgendes umfasst:
Erhalten der Zielversatzdistanz gemäß dem ersten Q-Wert.

4. Verfahren nach einem der Ansprüche 1-3, wobei das Detektieren einer Zielversatzrichtung der zweiten Spule relativ zur ersten Spule (601) unter Verwendung der Mehrzahl von Richtungsdetektionsspulen (602) Folgendes umfasst:
Detektieren (401) eines zweiten Q-Werts jeder der Mehrzahl von Richtungsdetektionsspulen (602); und
Bestimmen (402) der Zielversatzrichtung gemäß dem durch Detektieren erhaltenen zweiten Q-Wert jeder der Mehrzahl von Richtungsdetektionsspulen (602);
wobei der zweite Q-Wert ein Qualitätsfaktor ist.

5. Verfahren nach Anspruch 4, wobei das Bestimmen der Zielversatzrichtung gemäß dem durch Detektieren erhaltenen zweiten Q-Wert jeder der Mehrzahl von Richtungsdetektionsspulen (602) Folgendes umfasst:
Filtern eines oder mehrerer Ziel-Q-Werte aus dem zweiten Q-Wert jeder der Mehrzahl von Richtungsdetektionsspulen (602), wobei jeder des einen oder der mehreren Ziel-Q-Werte in einem zweiten voreingestellten Q-Wertbereich liegt und der zweite voreingestellte Q-Wertbereich ein Bereich eines Q-Werts jeder der Mehrzahl von Richtungsdetektionsspulen (602) in Reaktion darauf ist, dass eine Spule in einem voreingestellten Bereich um die jeweilige der Mehrzahl von Richtungsdetektionsspulen (602) vorhanden ist; und
Bestimmen der Zielversatzrichtung gemäß einer oder mehreren Anordnungsausrichtungen einer oder mehrerer der Mehrzahl von Richtungsdetektionsspulen (602), die dem einen oder den mehreren Ziel-Q-Werten entsprechen, relativ zur ersten Spule (601).

6. Verfahren nach Anspruch 5, wobei das Bestimmen der Zielversatzrichtung gemäß einer oder mehreren Anordnungsausrichtungen einer oder mehrerer der Mehrzahl von Richtungsdetektionsspulen (602), die dem einen oder den mehreren Ziel-Q-Werten entsprechen, relativ zur ersten Spule (601) Folgendes umfasst:
Bestimmen einer ersten Anordnungsausrichtung einer der Mehrzahl von Richtungsdetektionsspulen (602), die dem einen oder den mehreren Ziel-Q-Werten entsprechen, relativ zur ersten Spule (601) in Reaktion darauf, dass die Zahl des einen oder der mehreren Ziel-Q-Werte 1 ist, und Übernehmen der ersten Anordnungsausrichtung als die Zielversatzrichtung; und
Bestimmen von zweiten Anordnungsausrichtungen von mindestens zwei der Mehrzahl von Richtungsdetektionsspulen (602), die dem einen oder den mehreren Ziel-Q-Werten entsprechen, relativ zur ersten Spule (601) in Reaktion darauf, dass die Zahl des einen oder der mehreren Ziel-Q-Werte größer als 1 ist, und Bestimmen der Zielversatzrichtung gemäß den zweiten Anordnungsausrichtungen der mindestens zwei der Mehrzahl von Richtungsdetektionsspulen (602).

7. Verfahren nach Anspruch 6, wobei das Bestimmen der Zielversatzrichtung gemäß den zweiten Anordnungsausrichtungen der mindestens zwei der Mehrzahl von Richtungsdetektionsspulen (602) Folgendes umfasst:
Übernehmen einer Ausrichtung zwischen den zweiten Anordnungsausrichtungen der mindestens zwei der Mehrzahl von Richtungsdetektionsspulen (602) als die Zielversatzrichtung; oder
Bestimmen einer zweiten Ziel-Anordnungsausrichtung aus den zweiten Anordnungsausrichtungen der mindestens zwei der Mehrzahl von Richtungsdetektionsspulen (602) gemäß dem einen oder den mehreren Ziel-Q-Werten, und Übernehmen der zweiten Ziel-Anordnungsausrichtung als die Zielversatzrichtung; oder
Berechnen der Zielversatzrichtung basierend auf einer voreingestellten Richtungsberechnungsformel unter Verwendung der zweiten Anordnungsausrichtungen und des einen oder der mehreren Ziel-Q-Werte, die den zweiten Anordnungsausrichtungen entsprechen.

8. Verfahren nach einem der Ansprüche 1-7, wobei das Detektieren einer Zielversatzrichtung der zweiten Spule relativ zur ersten Spule (601) Folgendes umfasst:
Detektieren der Zielversatzrichtung in Reaktion darauf, dass die Zielversatzdistanz größer als ein voreingestellter Distanzschwellenwert ist.

9. Erstes Endgerät (101), umfassend eine erste Spule (601), die dazu konfiguriert ist, elektrische Energie zu übertragen, eine Mehrzahl von Richtungsdetektionsspulen (602), eine Detektionsschaltung (603) und eine Ausgabeschaltung (604), wobei die Mehrzahl von Richtungsdetektionsspulen (602) um die erste Spule (601) angeordnet sind, die erste Spule (601) und die Mehrzahl von Richtungsdetektionsspulen (602) mit der Detektionsschaltung (603) verbunden sind und die Detektionsschaltung (603) mit der Ausgabeschaltung (604) verbunden ist;
wobei die Detektionsschaltung (603) zu Folgendem konfiguriert ist:
Detektieren eines ersten Q-Werts der ersten Spule (601) und eines zweiten Q-Werts jeder der Mehrzahl von Richtungsdetektionsspulen (602);
Bestimmen, ob ein Positionsversatz zwischen der ersten Spule (601) und einer zweiten Spule eines zweiten Endgeräts (102) vorhanden ist, gemäß dem ersten Q-Wert, wobei die zweite Spule dazu konfiguriert ist, elektrische Energie zu übertragen;
Erhalten einer Zielversatzdistanz zwischen der zweiten Spule und der ersten Spule (601) gemäß dem ersten Q-Wert und Bestimmen einer Zielversatzrichtung der zweiten Spule relativ zur ersten Spule (601) gemäß dem zweiten Q-Wert jeder der Mehrzahl von Richtungsdetektionsspulen (602) in Reaktion auf ein Detektieren, dass der Positionsversatz zwischen der zweiten Spule und der ersten Spule (601) vorhanden ist; und
wobei die Ausgabeschaltung (604) dazu konfiguriert ist, Positionsbewegungsaufforderungsinformationen unter einer Steuerung der Detektionsschaltung (603) auszugeben, und die Positionsbewegungsaufforderungsinformationen dazu konfiguriert sind, einen Benutzer aufzufordern, das zweite Endgerät (102) oder das erste Endgerät (101) basierend auf der Zielversatzdistanz und der Zielversatzrichtung zu bewegen; wobei jeder des ersten Q-Werts und des zweiten Q-Werts ein Qualitätsfaktor ist.

10. Erstes Endgerät (101) nach Anspruch 9, wobei die Detektionsschaltung (603) eine oder mehrere Q-Wert-Messschaltungen (6031) und eine Verarbeitungsschaltung (6032) umfasst, die miteinander verbunden sind, wobei die eine oder mehreren Q-Wert-Messschaltungen (6031) mit der ersten Spule (601) und der Mehrzahl von Richtungsdetektionsspulen (602) verbunden sind und die Verarbeitungsschaltung (6032) mit der Ausgabeschaltung (604) verbunden ist;
wobei die eine oder mehreren Q-Wert-Messschaltungen (6031) dazu konfiguriert sind, die erste Spule (601) und jede der Mehrzahl von Richtungsdetektionsspulen (602) zu erregen, um Resonanzen zu erzeugen, Spannungen an zwei Enden der ersten Spule (601) und jeder der Mehrzahl von Richtungsdetektionsspulen (602) abzutasten, nachdem die erste Spule (601) und jede der Mehrzahl von Richtungsdetektionsspulen (602) die Resonanzen erzeugen, und Abtastergebnisse an die Verarbeitungsschaltung (6032) auszugeben;
wobei die Verarbeitungsschaltung (6032) zu Folgendem konfiguriert ist:
Erfassen des ersten Q-Werts und des zweiten Q-Werts jeder der Mehrzahl von Richtungsdetektionsspulen (602) gemäß den Abtastergebnissen;
Bestimmen, ob der Positionsversatz zwischen der zweiten Spule und der ersten Spule (601) vorhanden ist, gemäß dem ersten Q-Wert;
Erhalten der Zielversatzdistanz gemäß dem ersten Q-Wert und Bestimmen der Zielversatzrichtung gemäß dem zweiten Q-Wert jeder der Mehrzahl von Richtungsdetektionsspulen (602) in Reaktion auf ein Detektieren, dass der Positionsversatz zwischen der zweiten Spule und der ersten Spule (601) vorhanden ist; und
Steuern der Ausgabeschaltung (604) zum Ausgeben der Positionsbewegungsaufforderungsinformationen.

11. Erstes Endgerät (101) nach Anspruch 10, wobei die eine oder mehreren Q-Wert-Messschaltungen (6031) eine Mehrzahl von Q-Wert-Messschaltungen (6031) umfassen, wobei jede der Mehrzahl von Q-Wert-Messschaltungen (6031) mit der Verarbeitungsschaltung (6032) verbunden ist und jede der Mehrzahl von Q-Wert-Messschaltungen (6031) mit einer jeder der Mehrzahl von Richtungsdetektionsspulen (602) und der ersten Spule (601) verbunden ist; und
wobei jede der Mehrzahl von Q-Wert-Messschaltungen (6031) dazu konfiguriert ist, eine Zielspule zu erregen, um eine Resonanz zu erzeugen, Spannungen an zwei Enden der Zielspule abzutasten, nachdem die Zielspule die Resonanz erzeugt, und Abtastergebnisse an die Verarbeitungsschaltung (6032) auszugeben, und wobei die Zielspule eine der Mehrzahl von Richtungsdetektionsspulen (602) oder der ersten Spule (601) ist, die mit der jeweiligen der Mehrzahl von Q-Wert-Messschaltungen (6031) verbunden ist.

12. Erstes Endgerät (101) nach Anspruch 10 oder 11, wobei die eine oder mehreren Q-Wert-Messschaltungen (6031) eine Q-Wert-Messschaltung (6031) umfassen, wobei die eine Q-Wert-Messschaltung (6031) mit der ersten Spule (601) und jeder der Mehrzahl von Richtungsdetektionsspulen (602) in einem Zeitmultiplexmodus verbunden ist;
wobei die eine Q-Wert-Messschaltung (6031) dazu konfiguriert ist, eine Zielspule an einem aktuellen Moment zu erregen, um eine Resonanz zu erzeugen, Spannungen an zwei Enden der Zielspule an dem aktuellen Moment abzutasten, nachdem die Zielspule an dem aktuellen Moment die Resonanz erzeugt, und Abtastergebnisse an die Verarbeitungsschaltung (6032) auszugeben, und wobei die Zielspule eine der Mehrzahl von Richtungsdetektionsspulen (602) oder der ersten Spule (601) ist, die mit der einen Q-Wert-Messschaltung (6031) verbunden ist.

13. Erstes Endgerät (101) nach Anspruch 11 oder 12, wobei jede der einen oder mehreren Q-Wert-Messschaltungen (6031) eine Erregungsleistungszufuhr (a) für einen Wechselstrom, einen Kondensator (b) und eine Spannungsabtastungsschaltung (c) umfasst;
wobei der Kondensator (b) mit der Zielspule verbunden ist, die Erregungsleistungszufuhr (a) für den Wechselstrom dazu konfiguriert ist, den Wechselstrom an den Kondensator (b) und die Zielspule auszugeben, und der Wechselstrom dazu konfiguriert ist, die Zielspule zu erregen, um die Resonanz zu erzeugen;
wobei die Spannungsabtastungsschaltung (c) mit der Zielspule verbunden und dazu konfiguriert ist, die Spannungen an zwei Enden der Zielspule abzutasten und die Abtastergebnisse an die Verarbeitungsschaltung (6032) auszugeben.

14. Erstes Endgerät (101) nach einem der Ansprüche 9-13, wobei Distanzen zwischen der ersten Spule (601) und der Mehrzahl von Richtungsdetektionsspulen (602) zueinander gleich sind.

15. Nicht-flüchtiges computerlesbares Speichermedium, das ein Computerprogramm speichert, **dadurch gekennzeichnet, dass**, in Reaktion darauf, dass das Computerprogramm durch einen Prozessor ausgeführt wird, das Aufladeaufforderungsverfahren nach einem der Ansprüche 1-8 ausgeführt wird.

## Revendications

1. Procédé d'invitation à la charge pour un premier dispositif d'extrémité (101) d'un système de charge sans fil, le système de charge sans fil comprenant le premier dispositif d'extrémité (101) et un second dispositif d'extrémité (102), le premier dispositif d'extrémité (101) étant l'un d'un dispositif d'extrémité de réception et d'un dispositif d'extrémité d'émission, le second dispositif d'extrémité (102) étant l'autre du dispositif d'extrémité de réception et du dispositif d'extrémité d'émission, le premier dispositif d'extrémité (101) comprenant une première bobine (601) configurée pour transférer de l'énergie électrique et une pluralité de bobines de détection de direction (602) autour de la première bobine (601), le second dispositif d'extrémité (102) comprenant une seconde bobine configurée pour transférer l'énergie électrique, et le procédé comprenant :
- la détection (201) de l'existence d'un décalage de position entre la seconde bobine et la première bobine (601) ;
- l'obtention (202) d'une distance de décalage cible entre la seconde bobine et la première bobine (601) et la détection d'une direction de décalage cible de la seconde bobine par rapport à la première bobine (601) en utilisant la pluralité de bobines de détection de direction (602) en réponse à la détection de l'existence du décalage de position entre la seconde bobine et la première bobine (601) ; et
- l'émission en sortie (203) d'informations d'invite à un déplacement de position en fonction de la direction de décalage cible et la distance de décalage cible, les informations d'invite à un déplacement de position étant configurées pour inviter un utilisateur à déplacer le second dispositif d'extrémité (102) ou le premier dispositif d'extrémité (101) sur la base de la distance de décalage cible et de la direction de décalage cible.

2. Procédé selon la revendication 1, la détection de l'existence du décalage de position entre la seconde bobine et la première bobine (601) comprenant :
- la détection (301) d'une première valeur Q de la première bobine (601) ; et
- la détermination (302) de l'existence d'un décalage de position entre la seconde bobine et la première bobine (601) en réponse à la première valeur Q se trouvant dans une première plage de valeurs Q prédéfinie ;
la première plage de valeurs Q prédéfinie étant une plage de valeur Q de la première bobine (601) en réponse à l'existence d'une bobine dans une plage prédéfinie autour de la première bobine (601) et à l'existence d'un décalage de position entre la bobine existant autour et la première bobine (601), et la première valeur Q étant un facteur de qualité.

3. Procédé selon la revendication 2, l'obtention d'une distance de décalage cible entre la seconde bobine et la première bobine (601) comprenant :
- l'obtention de la distance de décalage cible en fonction de la première valeur Q.

4. Procédé selon l'une quelconque des revendications 1 à 3, la détection d'une direction de décalage cible de la seconde bobine par rapport à la première bobine (601) en utilisant la pluralité de bobines de détection de direction (602) comprenant :
- la détection (401) d'une seconde valeur Q de chacune de la pluralité de bobines de détection de direction (602) ; et
- la détermination (402) de la direction de décalage cible en fonction de la seconde valeur Q de chacune de la pluralité de bobines de détection de direction (602) obtenue par détection ;
la seconde valeur Q étant un facteur de qualité.

5. Procédé selon la revendication 4, la détermination de la direction de décalage cible en fonction de la seconde valeur Q de chacune de la pluralité de bobines de détection de direction (602) obtenue par détection comprenant :
- le filtrage d'une ou plusieurs valeurs Q cibles parmi la seconde valeur Q de chacune de la pluralité de bobines de détection de direction (602), chacune de la ou des valeurs Q cibles se trouvant dans une seconde plage de valeurs Q prédéfinie, et la seconde plage de valeurs Q prédéfinie étant une plage de valeur Q de chacune de la pluralité de bobines de détection de direction (602) en réponse à l'existence d'une bobine dans une plage prédéfinie autour de chacune de la pluralité de bobines de détection de direction (602) ; et
- la détermination de la direction de décalage cible en fonction d'une ou plusieurs orientations d'agencement d'une ou plusieurs de la pluralité de bobines de détection de direction (602) correspondant à la ou aux valeurs Q cibles par rapport à la première bobine (601).

6. Procédé selon la revendication 5, la détermination de la direction de décalage cible en fonction d'une ou plusieurs orientations d'agencement d'une ou plusieurs de la pluralité de bobines de détection de direction (602) correspondant à la ou aux valeurs Q cibles par rapport à la première bobine (601) comprenant :
- la détermination d'une première orientation d'agencement de l'une de la pluralité de bobines de détection de direction (602) correspondant à la ou aux valeurs Q cibles par rapport à la première bobine (601) en réponse au nombre de la ou des valeurs Q cibles étant 1, et la prise de la première orientation d'agencement comme direction de décalage cible ; et
- la détermination de secondes orientations d'agencement d'au moins deux de la pluralité de bobines de détection de direction (602) correspondant à la ou aux valeurs Q cibles par rapport à la première bobine (601) en réponse au nombre de la ou des valeurs Q cibles étant supérieur à 1, et la détermination de la direction de décalage cible en fonction des secondes orientations d'agencement des au moins deux de la pluralité de bobines de détection de direction (602).

7. Procédé selon la revendication 6, la détermination de la direction de décalage cible en fonction des secondes orientations d'agencement des au moins deux de la pluralité de bobines de détection de direction (602) comprenant :
- la prise d'une orientation entre les secondes orientations d'agencement des au moins deux de la pluralité de bobines de détection de direction (602) comme direction de décalage cible ; ou
- la détermination d'une seconde orientation d'agencement cible parmi les secondes orientations d'agencement des au moins deux de la pluralité de bobines de détection de direction (602) en fonction de la ou des valeurs Q cibles, et la prise de la seconde orientation d'agencement cible comme direction de décalage cible ; ou
- le calcul de la direction de décalage cible sur la base d'une formule de calcul de direction prédéfinie en utilisant les secondes orientations d'agencement et la ou les valeurs Q cibles correspondant aux secondes orientations d'agencement.

8. Procédé selon l'une quelconque des revendications 1 à 7, la détection d'une direction de décalage cible de la seconde bobine par rapport à la première bobine (601) comprenant :
- la détection de la direction de décalage cible en réponse à la distance de décalage cible étant supérieure à un seuil de distance prédéfini.

9. Premier dispositif d'extrémité (101), comprenant une première bobine (601) configurée pour transférer de l'énergie électrique, une pluralité de bobines de détection de direction (602), un circuit de détection (603), et un circuit de sortie (604), la pluralité de bobines de détection de direction (602) étant agencées autour de la première bobine (601), la première bobine (601) et la pluralité de bobines de détection de direction (602) étant connectées au circuit de détection (603), et le circuit de détection (603) étant connecté au circuit de sortie (604) ;
- le circuit de détection (603) étant configuré pour :
- détecter une première valeur Q de la première bobine (601) et une seconde valeur Q de chacune de la pluralité de bobines de détection de direction (602) ;
- déterminer si un décalage de position existe entre la première bobine (601) et une seconde bobine d'un second dispositif d'extrémité (102) en fonction de la première valeur Q, la seconde bobine étant configurée pour transférer de l'énergie électrique ;
- obtenir une distance de décalage cible entre la seconde bobine et la première bobine (601) en fonction de la première valeur Q et déterminer une direction de décalage cible de la seconde bobine par rapport à la première bobine (601) en fonction de la seconde valeur Q de chacune de la pluralité de bobines de détection de direction (602) en réponse à la détection de l'existence du décalage de position entre la seconde bobine et la première bobine (601) ; et
- le circuit de sortie (604) étant configuré pour émettre en sortie des informations d'invite à un déplacement de position sous une commande du circuit de détection (603), et les informations d'invite à un déplacement de position étant configurées pour inviter un utilisateur à déplacer le second dispositif d'extrémité (102) ou le premier dispositif d'extrémité (101) sur la base de la distance de décalage cible et de la direction de décalage cible ; chacune de la première valeur Q et de la seconde valeur Q étant un facteur de qualité.

10. Premier dispositif d'extrémité (101) selon la revendication 9, le circuit de détection (603) comprenant un ou plusieurs circuits de mesure de valeur Q (6031) et un circuit de traitement (6032) connectés entre eux, le ou les circuits de mesure de valeur Q (6031) étant connectés à la première bobine (601) et à la pluralité de bobines de détection de direction (602), et le circuit de traitement (6032) étant connecté au circuit de sortie (604) ;
- le ou les circuits de mesure de valeur Q (6031) étant configurés pour exciter la première bobine (601) et chacune de la pluralité de bobines de détection de direction (602) pour générer des résonances, échantillonner des tensions aux deux extrémités de la première bobine (601) et de chacune de la pluralité de bobines de détection de direction (602) après que la première bobine (601) et chacune de la pluralité de bobines de détection de direction (602) aient généré les résonances, et émettre en sortie les résultats d'échantillonnage vers le circuit de traitement (6032) ;
- le circuit de traitement (6032) étant configuré pour :
- acquérir la première valeur Q et la seconde valeur Q de chacune de la pluralité de bobines de détection de direction (602) en fonction des résultats d'échantillonnage ;
- déterminer si le décalage de position existe entre la seconde bobine et la première bobine (601) en fonction de la première valeur Q ;
- obtenir la distance de décalage cible en fonction de la première valeur Q et déterminer la direction de décalage cible en fonction de la seconde valeur Q de chacune de la pluralité de bobines de détection de direction (602) en réponse à la détection de l'existence du décalage de position entre la seconde bobine et la première bobine (601) ; et
- commander le circuit de sortie (604) pour émettre en sortie les informations d'invite à un déplacement de position.

11. Premier dispositif d'extrémité (101) selon la revendication 10, le ou les circuits de mesure de valeur Q (6031) comprenant une pluralité de circuits de mesure de valeur Q (6031), chacun de la pluralité de circuits de mesure de valeur Q (6031) étant connecté au circuit de traitement (6032), et chacun de la pluralité de circuits de mesure de valeur Q (6031) étant connecté à l'une de chacune de la pluralité de bobines de détection de direction (602) et à la première bobine (601) ; et
- chacun de la pluralité de circuits de mesure de valeur Q (6031) étant configuré pour exciter une bobine cible pour générer une résonance, échantillonner des tensions aux deux extrémités de la bobine cible après que la bobine cible ait généré la résonance, et sortir les résultats d'échantillonnage vers le circuit de traitement (6032), la bobine cible étant l'une de la pluralité de bobines de détection de direction (602) ou la première bobine (601) qui est connectée à chacun de la pluralité de circuits de mesure de valeur Q (6031).

12. Premier dispositif d'extrémité (101) selon la revendication 10 ou 11, le ou les circuits de mesure de valeur Q (6031) comprenant un circuit de mesure de valeur Q (6031), le circuit de mesure de valeur Q (6031) étant connecté à la première bobine (601) et à chacune de la pluralité de bobines de détection de direction (602) en mode de partage temporel ;
- le circuit de mesure de valeur Q (6031) étant configuré pour exciter une bobine cible au moment actuel pour générer une résonance, échantillonner des tensions aux deux extrémités de la bobine cible au moment actuel après que la bobine cible au moment actuel ait généré la résonance, et émettre en sortie les résultats d'échantillonnage vers le circuit de traitement (6032), la bobine cible étant l'une de la pluralité de bobines de détection de direction (602) ou la première bobine (601) qui est connectée au circuit de mesure de valeur Q (6031).

13. Premier dispositif d'extrémité (101) selon la revendication 11 ou 12, chacun du ou des circuits de mesure de valeur Q (6031) comprenant une alimentation d'excitation (a) pour un courant alternatif, un condensateur (b), et un circuit d'échantillonnage de tension (c) ;
- le condensateur (b) étant connecté à la bobine cible, l'alimentation d'excitation (a) pour le courant alternatif étant configurée pour émettre en sortie le courant alternatif vers le condensateur (b) et la bobine cible, et le courant alternatif étant configuré pour exciter la bobine cible pour générer la résonance ;
- le circuit d'échantillonnage de tension (c) étant connecté à la bobine cible et configuré pour échantillonner les tensions aux deux extrémités de la bobine cible et émettre en sortie les résultats d'échantillonnage vers le circuit de traitement (6032).

14. Premier dispositif d'extrémité (101) selon l'une quelconque des revendications 9 à 13, les distances entre la première bobine (601) et la pluralité de bobines de détection de direction (602) étant identiques les unes aux autres.

15. Support de stockage non transitoire lisible par ordinateur stockant un programme informatique, **caractérisé en ce qu'**en réponse à l'exécution du programme informatique par un processeur, le procédé d'invitation à la charge selon l'une quelconque des revendications 1 à 8 est exécuté.
